Europäisches Patentamt

European Patent Office

Office européen des brevets

(19)

(11) Publication number: **0 076 093**
**B1**

(12) **EUROPEAN PATENT SPECIFICATION**

(45) Date of publication of patent specification: **27.08.86**

(21) Application number: **82305001.8**

(22) Date of filing: **22.09.82**

(51) Int. Cl.⁴: **B 65 B 1/32,** B 65 B 59/00, B 65 B 39/00

(54) Automatic weighing apparatus.

(30) Priority: **22.09.81 JP 140765/81**

(43) Date of publication of application:
**06.04.83 Bulletin 83/14**

(45) Publication of the grant of the patent:
**27.08.86 Bulletin 86/35**

(84) Designated Contracting States:
**DE FR GB IT**

(56) References cited:
**US-A-2 333 790**
**US-A-3 946 772**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Kitagawa, Kazumi**
**423-3, Ogaki Rittou-cho**
**Kurita-gun Shiga (JP)**

(74) Representative: **Fane, Christopher Robin King et al**
**HASELTINE LAKE & CO. Hazlitt House 28 Southampton Buildings Chancery Lane London, WC2A 1AT (GB)**

Courier Press, Leamington Spa, England.

## Description

The present invention relates to article discharging means in automatic weighing apparatus, and is of particular interest as regards the provision of an article discharger in a combinatorial automatic weighing apparatus of the kind comprising a plurality of weighing machines arrayed circumferentially, at mutually-spaced locations, around a dispersing table and controlled so as to weigh respective quantities of articles received from the dispersing table and deliver to a collection chute a selected optimum combination of the weighed quantities, such as will have a total weight substantially equal or nearest to a preset target weight.

United States Patent Specification No. 2,333,790 discloses automatic weighing apparatus for delivering batches of articles, the weight of each of which batches is substantially equal to a preset target weight, by way of a timing hopper which is arranged to receive the articles through a chute and which has an outlet mechanism controlled so as to permit such batches to be discharged in turn from the hopper and so as to close off the outlet of the hopper temporarily upon termination of the discharge of each said batch, thereby enabling articles to accumulate in the hopper between successive discharges therefrom.

When articles to be weighed are sticky in nature, and/or after such apparatus has been used over a long period of time, it is found that such articles tend to remain stuck to the timing hopper. Such deposited articles need to be cleaned off the hopper, but since this timing hopper in the prior art apparatus is fixed in position this process can be both tedious and time-consuming, and it can be very difficult to clean such hoppers thoroughly. This can be particularly true when the timing hopper concerned is located centrally beneath an array of weighing machines as in a combinatorial weighing apparatus of the above-mentioned kind. To clean such timing hoppers thoroughly they may need to be removed from their working positions, but the prior timing hoppers could not be detached easily and their removal would have been unduly troublesome.

According to the present invention there is provided automatic weighing apparatus for delivering successive batches of articles, the weight of each of which batches is substantially equal to a preset target weight, by way of a timing hopper which is arranged to receive the articles through a chute and which has an outlet mechanism controlled so as to permit such batches to be discharged in turn from the hopper and so as to close off the outlet of the hopper temporarily upon termination of the discharge of each such batch, thereby enabling articles to accumulate in the hopper between successive discharges therefrom, characterised in that the timing hopper is mounted on support means enabling the hopper to be moved readily between its working position, for receiving the articles from the said chute, and an inspection position which is spaced from the said working position so as to give ready access to the hopper for inspection and cleaning, there being retaining means provided at the said working position and at the said inspection position for locating the timing hopper positively in each of those positions, thereby inhibiting movement of the timing hopper from either one of those positions towards the other.

Reference will now be made, by way of example, to the accompanying drawings, in which:

Figure 1 shows a diagrammatic side elevational view of a combinatorial automatic weighing apparatus;

Figure 2 shows, to a larger scale, a side elevational view of an article discharge apparatus for use with the apparatus of Figure 1 in accordance with an embodiment of the present invention;

Figure 3 shows a diagrammatic plan view of part of the apparatus of Figure 2; and

Figure 4 shows a diagrammatic end elevational view of part of the apparatus of Figure 2.

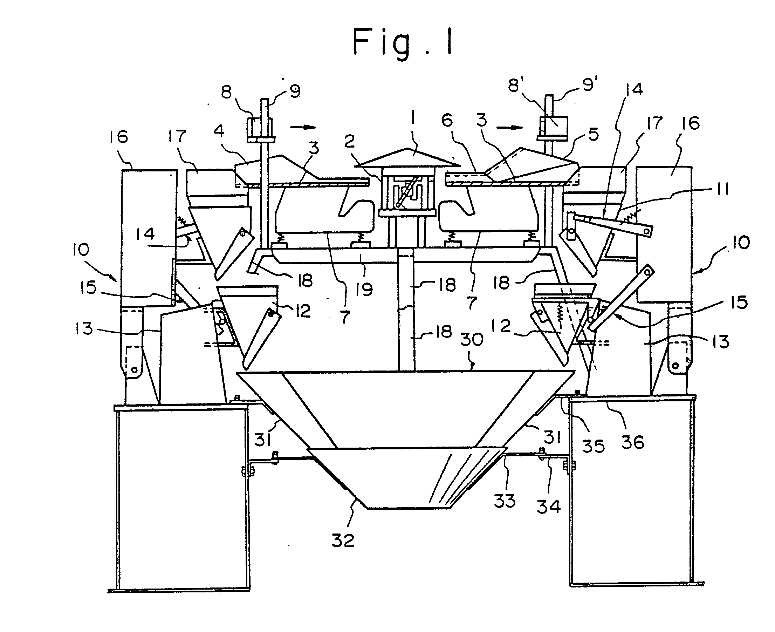

Figure 1 illustrates generally a combinatorial automatic weighing apparatus having hoppers. The weighing apparatus comprises a dispersing table 1 of a conical shape supported on an electromagnetic vibratory device 2, and a plurality of radially extending supply troughs 3 arranged around the dispersing table 1 in angularly spaced relation, the supply troughs 3 having radially inward ends underlying an outer peripheral edge of the dispersing table 1 in close proximity thereto. Each supply trough 3 has a radial passage defined by a vertical inverted V-shaped wall 4 and a slanted wall including an inverted V-shaped wall portion 5 extending approximately two-thirds of the entire length of the slanted wall and inclined outwardly and a wall portion 6 extending approximately one-third of the entire length of the slanted wall along the vertical wall 4 of an adjacent one of the supply troughs 3. The slanted wall portions 5, 6 are disposed in overhanging relation to and spaced from the vertical wall 4 of the adjacent supply trough 3.

The supply troughs 3 are supported respectively on electromagnetic vibratory units 7. The electromagnetic vibratory device 2 and the electromagnetic vibratory units 7 are mounted on a support table 19 fixed to four support legs 18 secured to a frame 36. The support table 19 supports thereon a post 9 on which a light-emitting device 8 is mounted and a post 9' on which a photo-detector 8' is mounted, the posts 9, 9' being diametrically symmetrically positioned with respect to the dispersing table 1. The weighing apparatus further comprises a plurality of weighing machines 10 mounted on the frame 36 in angularly spaced relation and positioned radially outwardly of the supply troughs 3. Each of the weighing machines 10 is composed of a pool hopper 11 for receiving articles from the corresponding supply trough 3, a weighing hopper 12 for receiving the articles from the pool hopper 11, a weighing mechanism 13 for weighing the articles contained in the weighing hopper 12, and a driver unit 16 having lever mechanisms 15, 14 for opening and closing the weighing hopper 12 and the pool hopper 11. The pool hopper 11 has upper guide plates 17 between which a radially outward end of the supply trough 3 is located so that the articles can reliably fall off the supply trough 3 into the pool hopper 11. A collection chute 30 has a plurality of unit chutes 31 located in circumferentially spaced positions and having upper openings sized largely enough to admit articles supplied from the weighing hoppers 12. The unit chutes 31 have lower ends projecting downwardly into a funnel-shaped lower chute 32, the unit chutes 31 being inclined at the same angle as that of inclination of the wall of the funnel-shaped lower chute 32. The unit chutes 31 are fastened to the frame 36 by brackets 35 fixed to lower inclined walls of the unit chutes 31. The lower chute 32 is secured to the frame 36 by brackets 33, 34.

In operation, articles supplied onto the dispersing table 1 are dispersed into the supply troughs 3 in response to operation of the electromagnetic vibratory device 2. The supply troughs 3 are vibrated by the electromagnetic vibratory units 7 to supply respective quantities of the articles from the supply troughs 3 into the corresponding pool hoppers 11, from which the articles are then allowed to fall into the associated weighing hoppers 12. The respective quantities of the articles thus received in the weighing hoppers 12 are weighed and various combinations of the weighed quantities are assessed by an electronic circuit so as to select a combination of the weighed quantities which will together give a batch of articles having a weight equal or closest to a preset target weight. Those weighing hoppers 12 which correspond to the selected combination are then opened to discharge the articles therefrom into the chutes 30, 32, from which they are delivered as a batch onto a conveyor or packing machine (not shown). Articles are supplied onto the dispersing table 1 by a non-illustrated feed conveyor in dependence upon transmission or interruption of optical signals from the light-emitting device 8 to the photodetector 8', so that a constant quantity of articles will remain stocked at all times on the dispersing table 1.

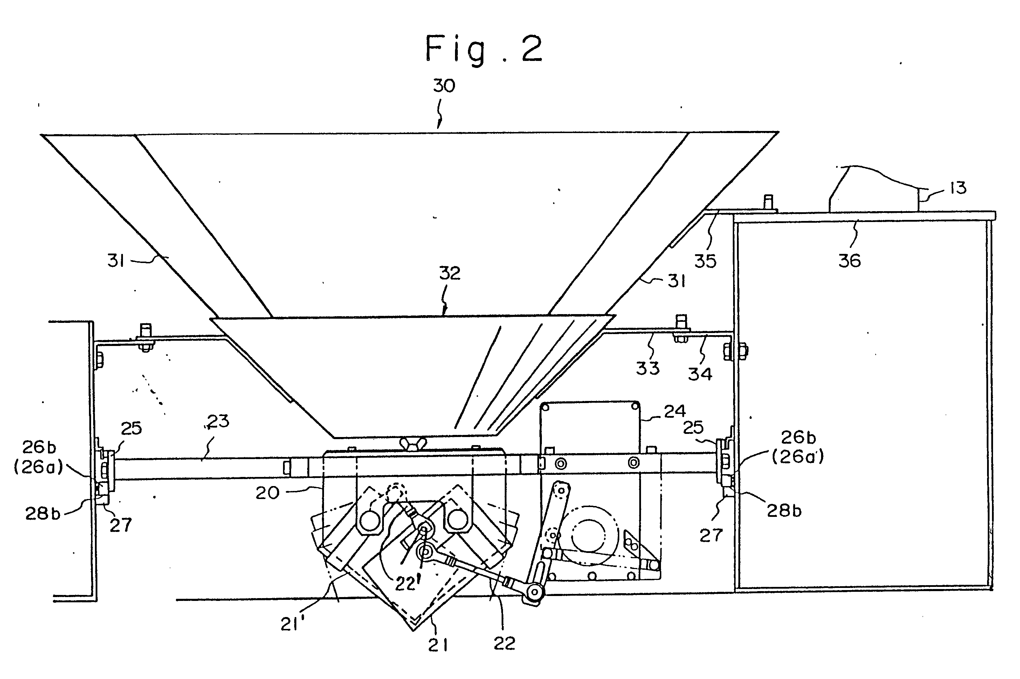

Figures 2 through 4 show an article discharger of an embodiment of the present invention. Where appropriate, parts shown in Figures 2 through 4 are denoted by the same reference characters as are used in Figure 1.

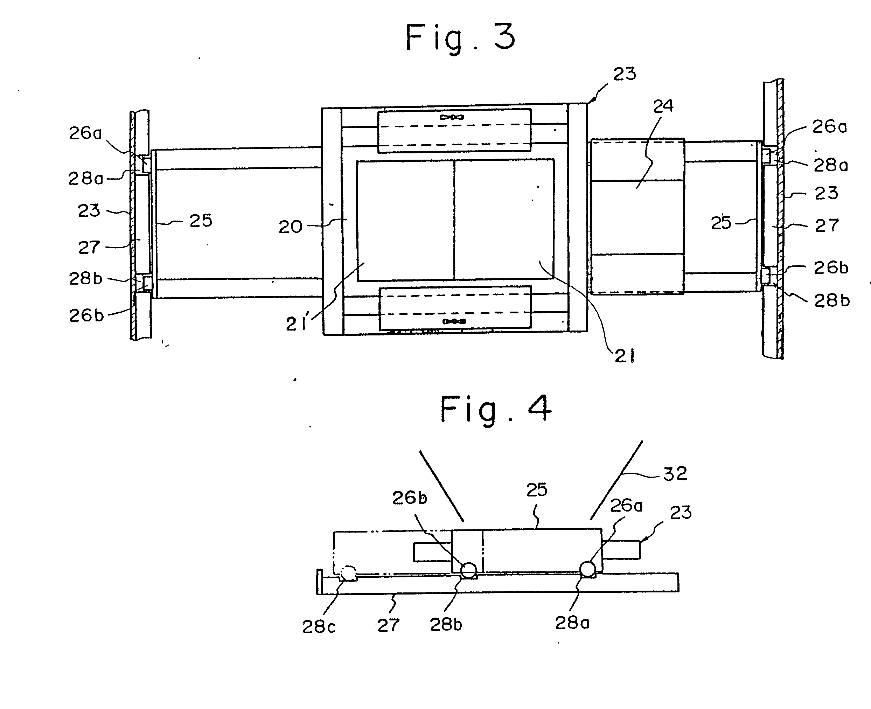

As shown in Figure 2, a timing hopper 20 is disposed below the lower chute 32 and has a lower outlet openable and closeable by a pair of covers 21, 21' swingable by a lever mechanism coupled through rods 22, 22' positioned alongside of the covers 21, 21'. As illustrated in Figures 3 and 4, the timing hopper 20 is mounted substantially centrally in a rectangular mounting frame 23. A driver mechanism 24 for driving the lever mechanism is located adjacent to the timing hopper 20. The frame 23 has end plates 25, 25 on which rollers 26a, 26a, 26b, 26b are rotatably mounted at front and rear ends of the end plates 25, 25, the rollers 26a, 26a, 26b, 26b being rollingly disposed on rails 27, 27 attached to the support frame 36. The rails 27, 27 are of a such a length that the timning hopper 20 can be moved laterally thereon to an outer inspection position remote from its working position below the lower chute 32. To locate the timing hopper 20 positively in either of these positions, the rails 27, 27 have three pairs of recesses 28a, 28a, 28b, 28b, 28c, 28c spaced therealong for receiving portions of the rollers 26 supporting the frame 23, the recesses being shaped such that the rollers can only be moved out of the recesses under an external force. When the timing hopper 20 is positioned below the lower chute 32, the rollers 26a, 26a, 26b, 26b of the base frame 23 are partly fitted in the recesses 28a, 28a, 28b, 28b, respectively, in the rails 27, 27, with the result that the timing hopper 20 is inhibited from movement away from the working position below the chute 32. When the timing hopper 20 is forcibly moved out of this position, however, the rollers 26a, 26a, 26b, 26b can then readily be caused to roll along the rails 27, 27 until they fit into the recesses 28b, 28b, 28c and 28c so that the timing hopper 20 becomes located in its outer inspection position and is retained against accidental displacement therefrom.

After a batch of articles has been supplied from weighing hoppers 12 into the timing hopper 20, the covers 21, 21' thereof are opened by the driver mechanism 24 through the lever mechanism and rods 22, 22' driven thereby. Such discharging operations are carried out repeatedly, over a long period of time. When it becomes necessary to inspect the timing hopper 20 for any wear or to clean away deposited articles, the timing hopper 20 on the mount base 23 is forcibly pulled out from below the lower chute 32 to the outer position, in which the timing hopper 20 is inspected or cleaned. After the inspecting or cleaning operation, the timing hopper 20 on the mount base 23 is forced out of its inspection position and pushed in along the rails until it is located again below the lower chute 32. Then, the combinatorial weighing operation is carried out again.

As described above, the timing hopper 20 is supported for rolling movement along the rails 27, 27 and can be retained temporarily in position, restrained against accidental displacement, with the rollers 26a, 26a, 26b, 26b partly fitted selectively in the recesses 28a, 28a, 28b, 28b, 28c, 28c. The timing hopper 20 can only be displaced by being forcibly pushed in or out to move the rollers over the edges of the abutments formed by the recesses.

**Claims**

1. Automatic weighing apparatus for delivering successive batches of articles, the weight of each of which batches is substantially equal to a preset target weight, by way of a timing hopper (20) which is arranged to receive the articles through a chute (32) and which has an outlet mechanism (21, 22) controlled so as to permit such batches to be discharged in turn from the hopper and so as to close off the outlet of the hopper temporarily upon termination of the discharge of each such batch, thereby enabling articles to accumulate in the hopper between successive discharges therefrom; characterised in that the timing hopper is mounted on support means (23, 25, 26, 27) enabling the hopper to be moved readily between its working position, for receiving the articles from the said chute, and an inspection position which is spaced from the said working position so as to give ready access to the hopper for inspection and cleaning, there being retaining means (28a, 28c) provided at the said working position and at the said inspection position for locating the timing hopper positively in each of those positions, thereby inhibiting movement of the timing hopper from either one of those positions towards the other.

2. Apparatus as claimed in Claim 1, wherein the said support means comprises rollers (26a, 26b) whereby the timing hopper is supported on rails (27) along which the rollers roll when the hopper is moved between its working and inspection positions, the said retaining means comprising respective recesses (28a, 28c) formed in the said rails so as to receive the said rollers when the hopper is in either of those positions.

3. Apparatus as claimed in Claim 1 or 2, being a combinatorial weighing apparatus comprising a plurality of weighing machines (10) arrayed circumferentially, at respective mutually-spaced locations, around a dispersing table (1) and controlled so as to weigh respective quantities of articles received from the dispersing table and deliver to the said chute a combination of the weighed quantities such as will have a total weight substantially equal or nearest to the said target weight.

4. Apparatus as claimed in any preceding claim, wherein an automatically operated driver mechanism (24) for controlling the said outlet mechanism of the timing hopper is mounted for movement therewith on the said support means.

## Patentansprüche

1. Automatische Wiege-Vorrichtung zur Ablieferung aufeinanderfolgender Partien von Artikeln, wobei das Gewicht jeder Partie einem vorgegebenen Soll-Gewicht im wesentlichen entspricht, mit Hilfe eines Zeitsteuerungsschachtes (20), der so angeordnet ist, daß er die Artikel durch eine Rutsche (32) erhält und der einen Auslaßmechanismus (21, 22) aufweist, der so gesteuert ist, daß solche Partien der Reihe nach aus dem Schacht abgegeben werden und daß der Auslaß Schachtes bei Beendigung der Abgabe einer jeden solchen Partie zeitweilig abgesperrt wird, wodurch sich zwischen aufeinanderfolgenden Schacht-Austrägen Artikel in dem Schacht ansammeln können, dadurch gekennzeichnet, daß der Zeitsteuerungsschacht auf einer Tragvorrichtung (23, 25, 26, 27) angeordnet ist, mit deren Hilfe der Schacht zwischen seiner Arbeitsposition zur Aufnahme der Artikel aus der Rutsche und einer Inspektionsposition bewegbar ist, die von der Arbeitsposition entfernt ist, um zur Inspektion und Reinigung guten Zugang zu dem Schacht zu gewähren und daß an der Arbeitsposition und an der Inspektionsposition Halteeinrichtungen (28a, 28c) vorgesehen sind, die den Zeitsteuerungsschacht in jeder dieser Positionen festlegen, wodurch Bewegungen des Zeitsteuerungsschachtes aus der einen Position gegen die andere Position verhindert werden.

2. Vorrichtung nach Anspruch 1, bei der die Tragvorrichtung Rollen (26a, 26b) aufweist, die den Zeitsteuerungsschacht auf Schienen (27) lagern, auf denen die Rollen entlangrollen, wenn der Schacht zwischen seiner Arbeitsposition und seiner Inspektionsposition bewegt wird und bei der die Halteeinrichtung jeweilige Vertiefungen (28a, 28c) in den Schienen aufweist, die die Rollen aufnehmen, wenn der Schacht sich in einer der Positionen befindet.

3. Vorrichtung nach Anspruch 1 oder 2, die eine Kombinationswaage ist, welche mehrere Waagen (10) aufweist, die an in gegenseitigem Abstand befindlichen Stellen um einen Verteilertisch (1) umfangsmäßig aufgereiht und so gesteuert sind, daß sie jeweilige Mengen von Artikeln abwiegen, die sie von dem Verteilertisch erhalten und der Rutsche eine solche Kombination der abgewogenen Mengen zuführen, deren Gesamtgewicht dem Sollgewicht im wesentlichen entspricht oder am nächsten kommt.

4. Vorrichtung nach den vorangegangenen Ansprüchen, bei der ein automatisch betätigter Antriebsmechanismus (24) zur Steuerung des Auslaßmechanismus des Zeitsteuerungsschachtes mit diesem mitbeweglich auf der Tragvorrichtung angeordnet ist.

## Revendications

1. Appareil de pesage automatique destiné à fournir de quantités successives d'articles, dont le poids de chacune est sensiblement égal à un poids visé préréglé, par l'intermédiaire d'un trémie (20) de distribution qui est disposée pour recevoir les articles à travers une goulotte (32) et qui est équipée d'un mécanisme (21, 22) de sortie commandé de manière à permettre le déversement de ces quantités d'articles tour à tour depuis la trémie et de manière à fermer temporairement la sortie de la trémie lorsque le déversement de chacune de ces quantités d'articles est terminé, permettant de ce fait l'accumulation des articles dans la trémie entre des déversements successifs; caractérisé en ce que la trémie de distribution est montée sur des moyens (23, 25, 26, 27) formant supports qui permettent le déplacement facile de la trémie entre sa position de fonctionnement, pour recevoir les articles venant de la goulotte, et une position de visite qui se trouve à une certaine distance de la position de fonctionnement de manière à faciliter l'accès de la trémie en vue de sa visite et de on mettoyage, des moyens (28a, 28c) de maintien étant prévus dans la position de fonctionnement et dans la position de visite pour fixer de manière sûre l'emplacement de la trémie de distribution dans chacune de ces positions, empêchant de ce fait tout déplacement de la trémie de distribution de l'une de ces deux positions vers l'autre.

2. Appareil suivant la revendication 1, dans lequel les moyens formant supports comprennent des galets (26a, 26b) au moyen desquels la trémie de distribution est supportée sur des rails (27) le long desquels roulent ces galets lorsque la trémie se déplace entre sa position de fonctionnement et sa position de visite, les moyens de maintien comprenant des encoches respectives (28a, 28c) formées dans les rails pour recevoir les galets lorsque la trémie se trouve dans l'une ou l'autre de ces positions.

3. Appareil suivant l'une des revendications 1 ou 2, consistant dans un appareil de pesage combiné comprenant une pluralité de machines peseuses (10) disposées en cercle, à des emplacements espacés les uns des autres, autour d'une sole distributrice (1) et commandées de manière à peser des quantités respectives d'articles reçus de la sole distributrice et à envoyer dans la goulotte une combinaison des quantités pesées, telle qu'elle atteindra un poids total sensiblement égal ou le plus rapproché du poids visé.

4. Appareil suivant l'une quelconque des revendications précédentes, dans lequel un mécanisme (24) de commande à fonctionnement automatique, destiné à commander le mécanisme de sortie de la trémie de distribution, est monté afin de se déplacer avec celle-ci sur les moyens formant supports.

# Fig. 1

# Fig.2

0 076 093

# Fig. 3

# Fig. 4